# EUROPÄISCHE PATENTSCHRIFT

(11) **EP 1 725 417 B1**
(45) Veröffentlichungstag und Bekanntmachung des Hinweises auf die Patenterteilung: **20.12.2017**
(21) Anmeldenummer: 05715072.4
(22) Anmeldetag: 09.03.2005
(51) Int. Cl.: B60L 5/00, B60L 13/10

(54) **VORRICHTUNG ZUR ÜBERTRAGUNG ELEKTRISCHER ENERGIE VOM FAHRWEG AUF DAS FAHRZEUG EINER MAGNETSCHWEBEBAHN**
DEVICE FOR TRANSMITTING ELECTRICAL ENERGY FROM THE TRACK TO THE VEHICLE OF A MAGNETIC LEVITATION RAILWAY
DISPOSITIF POUR TRANSMETTRE DE L'ENERGIE ELECTRIQUE DE LA VOIE DE CIRCULATION AU VEHICULE D'UN TRAIN A SUSTENTATION MAGNETIQUE

(30) Priorität: 15.03.2004 DE 102004012744; 19.11.2004 DE 102004056439
(43) Veröffentlichungstag der Anmeldung: 29.11.2006
(73) Patentinhaber: ThyssenKrupp Transrapid GmbH, 34127 Kassel (DE)
(72) Erfinder: BECKER, Peter, 82140 Olching (DE); HAHN, Wolfgang, 34125 Kassel (DE); MILLER, Luitpold, 85521 Ottobrunn (DE)
(74) Vertreter: Lorenz, Bernd Ingo Thaddeus
(86) Internationale Anmeldenummer: PCT/DE2005/000407
(87) Internationale Veröffentlichungsnummer: WO 2005/090112

(56) Entgegenhaltungen:
- EP-A- 0 580 107
- DE-A- 3 237 373
- DE-A- 10 232 720
- DE-A- 19 512 107

## Beschreibung

Die Erfindung betrifft eine Vorrichtung der im Oberbegriff des Anspruchs 1 angegebenen Gattung.

Die Bordenergie üblicher Magnetschwebebahnen wird in der Regel berührungslos mit Hilfe von Lineargeneratoren erzeugt, die in die Magnetpole der wenigstens einen, zum Tragen und/oder Führen des Magnetschwebefahrzeugs bestimmten Magnetanordnung integriert sind und z. B. mit einem Langstator zusammenwirken (z. B. DE 34 10 119 A1). Die Energieübertragung hängt dabei von der Geschwindigkeit des Magnetschwebefahrzeugs ab, weshalb bisherige Vorrichtungen erst ab Geschwindigkeiten von ca. 100 km/h den vollen Energiebedarf des Magnetschwebefahrzeugs decken. Deswegen sind längs des Fahrwegs dort, wo die Geschwindigkeit der Magnetschwebefahrzeuge geringer oder Null ist (z. B. in Bahnhöfen), zusätzliche Energiequellen erforderlich. Dazu gehören einerseits leistungsstarke, im Magnetschwebefahrzeug mitgeführte Batterien, andererseits externe Mittel wie z. B. längs Langsamfahrabschnitten des Fahrwegs verlegte Stromschienen, denen am Magnetschwebefahrzeug angebrachte Stromabnehmer zugeordnet sind. Letzteres kann es erforderlich machen, das Magnetschwebefahrzeug bei Betriebsstörungen nur dort anzuhalten, wo eine solche externe Stromversorgung vorhanden ist. Außerdem ist der finanzielle Aufwand für derartige Vorrichtungen vergleichsweise groß. Schließlich erfordern sie eine ständige Wartung aufgrund von Entladungsvorgängen in den Batterien oder aufgrund eines mechanischen Verschleißes.

Eine gattungsgemäße Vorrichtung, von der die vorliegende Erfindung ausgeht, ist aus EP 0 580 107 A1 bekannt. Eine Empfängerspule ist um ein T-förmiges Joch gewickelt, wobei ein Träger, auf dem die Empfängerspule angeordnet ist, Schlitze für den Primärleiter aufweist. Es ergibt sich eine relativ aufwendige Konstruktion, wobei an den Schlitzen die Gefahr einer Verschmutzung und somit einer Funktionsbehinderung besteht.

Aus DE 195 12 107 A1 ist eine berührungslose Einrichtung zur Energieübertragung bei einem schienengebundenen Fahrzeug bekannt. Ein bewegliches Sekundärteil ist aus einem Übertragerkopf mit Wicklungen gebildet, wobei ein Primärteil zu einem Mittelleiter und einem Außenleiter gebildet ist. Insgesamt ergibt sich eine relativ komplizierte, verschachtelte Struktur, welche geschützt angeordnet werden muss.

Die DE 32 37 373 A1 betrifft eine kontaktlose Stromabnehmervorrichtung für Magnetschwebebahnen, wobei an einem Bahnkörper supraleitende Magneten angeordnet sind. Zusätzlich ist eine Vielzahl von Stromabnehmer-Induktionsspulen vorgesehen, wobei die Stromabnehmer-Induktionsspulen unterschiedliche Windungszahlen besitzen, die von der Höhe der in jeder Stromabnehmer-Induktionsspule pro Windung induzierten Spannung abhängen. Die Bereitstellung unterschiedlicher Spannungen ist auch mit einem relativ hohen Fertigungsaufwand verbunden.

Das der Erfindung zugrunde liegende technische Problem besteht daher darin, die Vorrichtung der eingangs bezeichneten Gattung so auszubilden, daß sie mit einfachen und preisgünstigen, konstruktiven Mitteln eine wirksame und dauerhafte Energieübertragung gewährleistet.

Zur Lösung dieser Aufgabe dienen die kennzeichnenden Merkmale des Anspruchs 1.

Die erfindungsgemäße Vorrichtung bringt den Vorteil mit sich, daß sie verschleiß- und auch in Winterzeiten wartungsarm arbeitet. Der Primärleiter kann außerdem preisgünstig hergestellt und mit tolerierbarem Kostenaufwand längs des gesamten Fahrwegs angebracht werden, wodurch das Magnetschwebefahrzeug bei Störungen an jedem beliebigen Punkt der Strecke angehalten oder mit reduzierter Geschwindigkeit betrieben werden kann. Die Befestigung der Empfängerspule am Magnetrücken bringt außerdem den Vorteil mit sich, daß sie mit der Magnetanordnung zu einer integralen Baueinheit zusammengefaßt werden kann und ihre relative Lage zum Primärleiter geringeren Schwankungen unterliegt, als wenn sie z. B. an dem mit Federn am Magnetrücken abgestützten Wagenkasten montiert würde.

Weitere vorteilhafte Merkmale der Erfindung ergeben sich aus den Unteransprüchen.

Die Erfindung wird nachfolgend anhand der in unterschiedlichen Maßstäben gehaltenen Zeichnungen an Ausführungsbeispielen näher erläutert. Es zeigen:
- Fig. 1: schematisch einen Teilschnitt durch ein übliches Magnetschwebefahrzeug im Bereich eines mit einem Langstator versehenen Fahrwegs,
- Fig. 2 und 3: in perspektivischen Darstellungen einen Modul mit zwei Magnetanordnungen des Magnetschwebefahrzeugs nach Fig. 1, von der Fahrwegseite bzw. von der Außenseite her betrachtet,
- Fig. 4: schematisch einen Regelkreis für die Magnetanordnungen nach Fig. 2 und 3,
- Fig. 5: eine der Fig. 3 entsprechende Darstellung des Moduls, jedoch nach Entfernung einer vorderen Verkleidung und mit Blick auf verschiedene, in einem Magnetrücken montierte Komponenten,
- Fig. 6: eine schematische Vorderansicht einer der Magnetanordnungen nach Fig. 5 mit weiteren Einzelheiten ;
- Fig. 7: einen Schnitt längs der Linie VII-VII der Fig. 6 ;
- Fig. 8: ein schematisches Schaltbild für die Magnetanordnung nach Fig. 6 bei erfindungsgemäßer Einzelansteuerung ihrer Magnetpole ;
- Fig. 9: einen der Fig. 1 ähnlichen, jedoch vergrößerten Teilschnitt zur Darstellung einer berührungslosen Energieübertragung vom Fahrweg auf das Magnetschwebefahrzeug ;
- Fig. 10: die Vorderansicht einer Magnetanordnung mit einer Empfängerspule für die berührungslose Energieübertragung, von der Seite eines Trägers des Fahrwegs her gesehen,
- Fig. 11: einen Schnitt längs der Linie XI-XI der Fig. 10,
- Fig. 12: eine perspektivische Vorderansicht der Magnetanordnung nach Fig. 10,
- Fig. 13: eine vergrößerte Einzelheit X der Fig. 11,
- Fig. 14: eine schematische und perspektivische, stark vergrößerte Darstellung eines Teils einer Wicklungshälfte einer in die Magnetanordnung nach Fig. 12 integrierten Empfängerspule von vom, d. h. von der Seite eines in Fig. 9 gezeigten, an einem Fahrwegträger montierten Primärleiters aus gesehen,
- Fig. 15: eine der Fig. 14 entsprechende Darstellung der Wicklungshälfte, jedoch von hinten, d. h. von der Seite eines in Fig. 9 am Magnetschwebefahrzeug montierten Magnetrückens aus gesehen,
- Fig. 16: schematisch den aus Fig. 15 ersichtlichen Teil der Wicklungshälfte nach Abwinklung von Wicklungsköpfen um ca. 90°,
- Fig. 17 und 18: schematisch die Wicklungshälfte in den Fig. 14 und 15 entsprechenden Ansichten, jedoch nach Abwinklung von Wicklungsköpfen um ca. 180° und
- Fig. 19: schematisch einen vergrösserten Querschnitt durch eine Wicklungshälfte nach Fig. 16 und den Primärleiter.

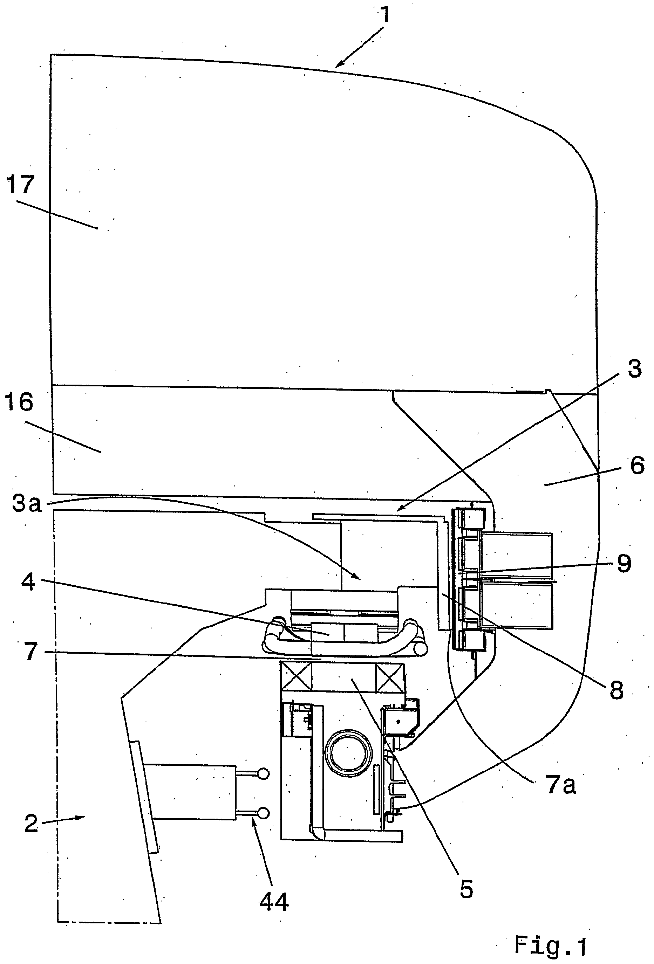

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt mittels eines Langstatormotors, der unterhalb der Fahrwegplatte 3 befestigte, in deren Längsrichtung aufeinander folgende Statorpakete 4 aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstatormotors wird durch wenigstens eine erste, als Tragmagnet 5 wirkende Magnetanordnung erzeugt, die mit wenigstens einem seitlichen Gestellbügel 6 am Magnetschwebefahrzeug 1 befestigt ist und den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb des Magnetschwebefahrzeugs 1 einen vorgegebenen Spalt 7 von z. B. 10 mm zwischen dem Tragmagenten 5 und den Statorpaketen 4 aufrecht erhält.

Zur Spurführung des Magnetschwebefahrzeugs 1 weist die Fahrwegplatte 3 seitlich angebrachte Führschienen 8 auf, denen ebenfalls an den Gestellbügeln 6 montierte Führmagnete 9 gegenüberstehen, die beim Betrieb dazu dienen, zwischen sich und der Führschiene 8 einen dem Spalt 7 entsprechenden Spalt 7a aufrechtzuerhalten.

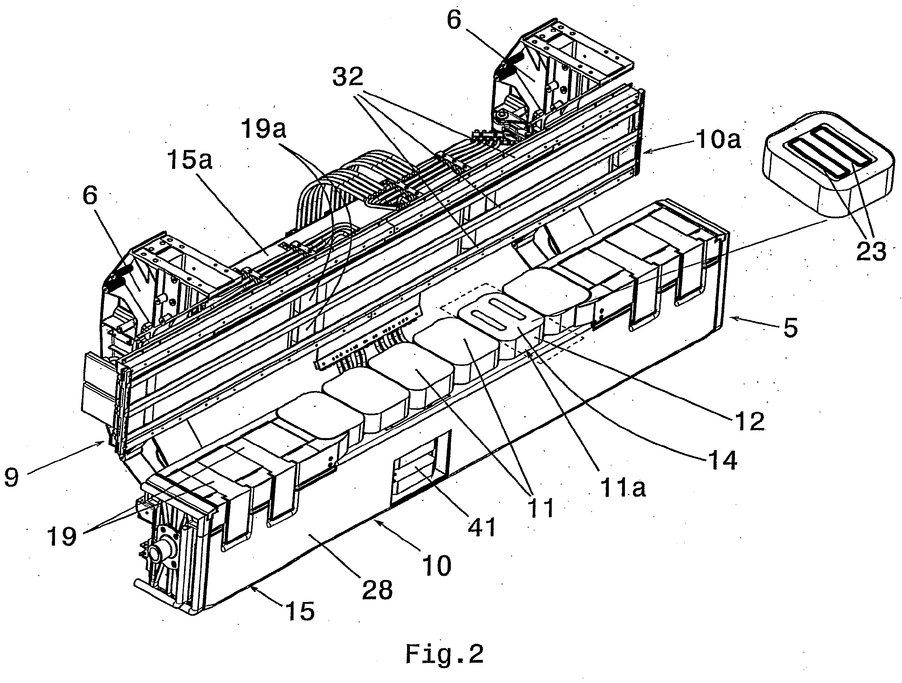

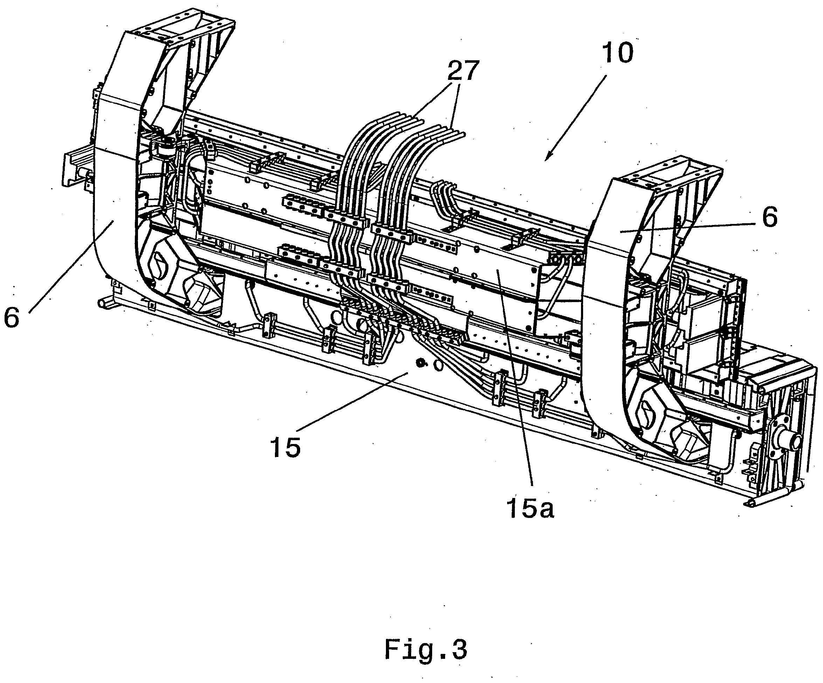

Gemäß Fig. 2 und 3 bilden der in Fig. 1 gezeigte Tragmagnet 5 und der Führmagnet 9 jeweils einen an den Gestellbügeln 6 befestigten Modul mit je einer Magnetanordnung 10 bzw. 10a für die Funktionen "Tragen" bzw. "Führen". Es ist jedoch klar, daß am Magnetschwebefahrzeug 1 seitlich nebeneinander und in Fahrtrichtung hintereinander in der Regel eine Vielzahl derartiger Module angebracht sein kann.

Die Magnetanordnung 10 für die Funktion "Tragen" enthält zwölf hintereinander angeordnete Magnetpole 11, deren elektrisch in Reihe geschaltete Wicklungen 12 und Kerne 14, die in Fig. 2 für einen der Magnetpole 11a schematisch angedeutet sind, normalerweise rundum von einem Korrosionsschutz in Form einer Gießharzschicht od. dgl. umgeben sind. Die Kerne 14 der einzelnen Magnetpole 11 sind untereinander durch nicht gezeigte Polrücken miteinander und mittels ebenfalls nicht dargestellter Polwangen und diese durchragender Stäbe an einem nachfolgend kurz als Magnetrücken bezeichneten Magnetrückenkasten 15 der Magnetanordnung 10 befestigt. An diesem Magnetrücken 15 greifen über Primärfedern die Gestellbügel 6 an, die mit einem biegesteifen, Längs- und Querverbinder aufweisenden Untergestell bzw. Schweberahmen 16 (Fig. 1) verbunden sind, auf dem ein mit einer Fahrgastzelle versehener Wagenkasten 17 des Magnetschwebefahrzeugs 1 abgestützt ist.

Magnetschwebefahrzeuge 1 und deren Magnetanordnungen sind dem Fachmann z. B. aus den Druckschriften US-PS 4,698, 895, DE 39 28 277 A1 und PCT WO 97/30 50 4 A1 allgemein bekannt, die hiermit der Einfachheit halber durch Referenz zum Gegenstand der vorliegenden Offenbarung gemacht werden.

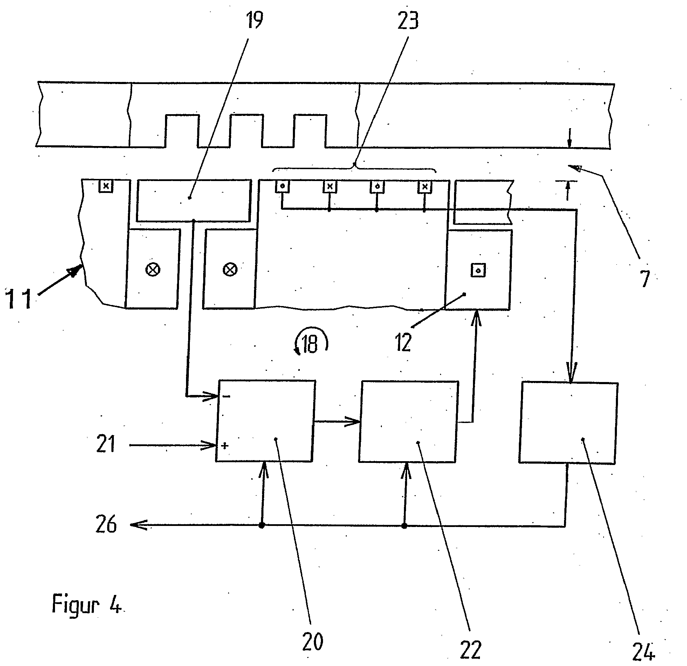

Zur Regelung der Wicklungen 12 der Magnetpole 11 derart, dass der Spalt 7 bei der Fahrt des Magnetschwebefahrzeugs 1 konstant bleibt, dient ein Regelkreis 18 nach Fig. 4. Dieser enthält wenigstens einen, vorzugsweise mehrere Spaltsensoren 19 (vgl. auch Fig. 2), die an dieselbe Ebene wie die Magnetpole 11 grenzen, mit induktiven oder kapazitiven Mitteln die aktuelle Größe des Spalts 7 messen und als Istwertgeber für den Regelkreis 18 dienen. Die vom Spaltsensor 19 abgegebenen elektrischen Signale werden einem Regler 20 zugeführt und in diesem mit einem über eine Leitung 21 fest vorgegebenen oder adaptierten Sollwert verglichen. Der Regler 20 ermittelt daraus ein Differenz- bzw. Stellsignal für ein Stellglied 22, das seinerseits den Strom durch die Wicklungen 12 so steuert, daß der Spalt 7 eine im wesentlichen konstante Größe hat und während der Fahrt beibehält.

Zur Versorgung des Regelkreises 18 mit der erforderlichen Betriebsspannung dient in Fig. 4 eine Energieversorgungseinheit, die in wenigstens einem Magnetpol angebrachte Wicklungen 23 eines Lineargenerators enthält, die in Fig. 2 in einer vergrößerten Einzelheit des Magnetpols 11a beispielhaft dargestellt sind und im Zusammenwirken mit dem Langstator eine von der Geschwindigkeit des Magnetschwebefahrzeugs 1 abhängige Wechselspannung von z. B. bis 300 V liefern. Diese Spannung wird in einem z. B. einen Hochsetzsteller aufweisenden Spannungswandler 24 in eine für den Betrieb vorgesehene Gleichspannung von z. B. 440 V umgewandelt, die einerseits an den Regler 20 und das Stellglied 22 gelegt, andererseits über eine Leitung 26 an das Bordnetz des Magnetschwebefahrzeugs 1 weitergeleitet wird.

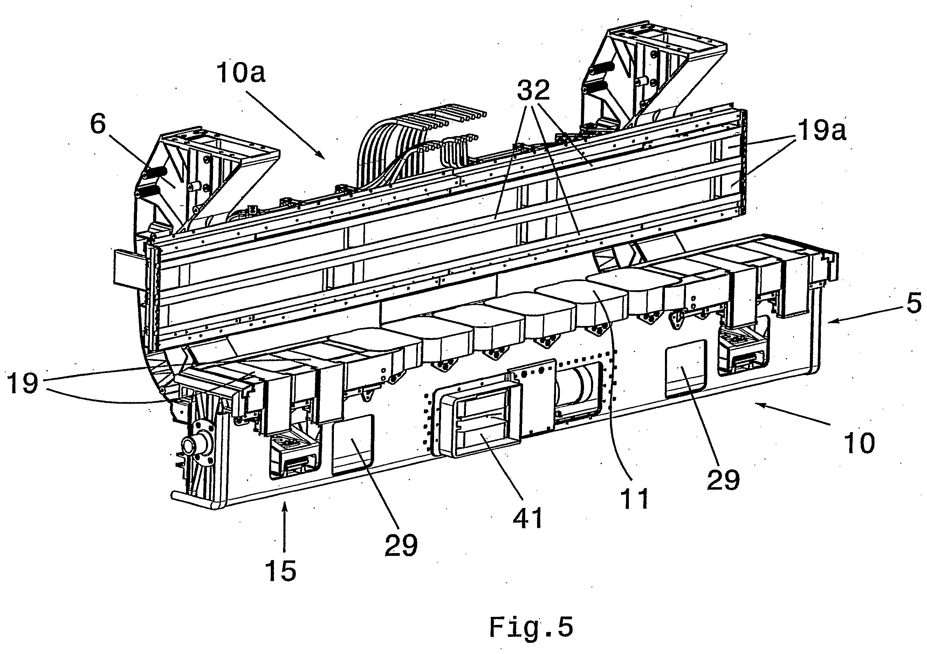

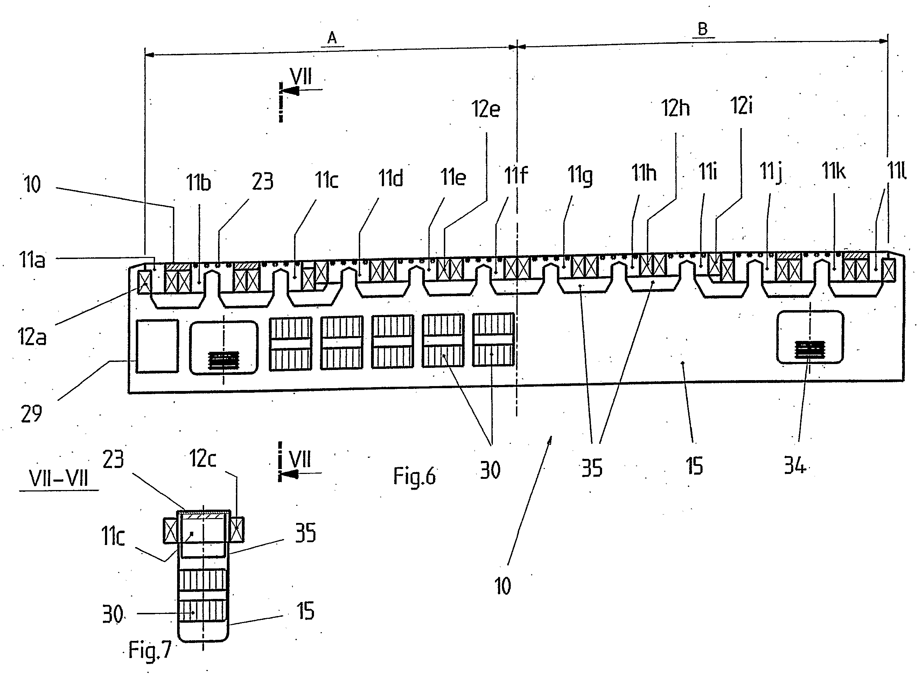

Während der Regler 20, das Stellglied 22 und der Spannungswandler 24 bisher irgendwo, vorzugsweise im Boden des Wagenkastens 17 untergebracht sind, was umfangreiche, durch das Bezugszeichen 27 in Fig. 3 angedeutete Verkabelungen erforderlich macht, wird erfindungsgemäß vorgeschlagen, diese Komponenten sämtlich im Magnetrücken 15 der Magnetanordnung 10 unterzubringen. Dies ergibt sich insbesondere aus Fig. 5, die eine Ansicht des Magnetrückens 15 nach Entfernung einer zum Fahrweg 3 hin gerichteten Verkleidung 28 (Fig. 2) zeigt. Mit den Bezugszeichen 29 sind beispielhaft Öffnungen im Magnetrücken 15 gezeigt, die zur Aufnahme von nicht näher dargestellten, jedoch in Fig. 6 und 7 angedeuteten Einschüben 30 dienen, die den Regelkreis 18 und dessen Komponenten 20 bis 22 sowie die Spannungswandler 24 der Energieversorgungseinheit aufnehmen. Zweckmäßig sind die Einschübe 30 so gestaltet, dass bei ihrer Montage ohne weitere Zusatzarbeiten die richtigen Kontaktierungen hergestellt werden, d. h. die Öffnungen 29 und die Einschübe 30 sind mit zusammenwirkenden Steck- und Einschubmitteln od. dgl. versehen.

Die Unterbringung des Regelkreises 18 und des Spannungswandlers 24 im Magnetrücken 15 ist ohne Probleme möglich, weil der Magnetrücken 15 bei bekannten Magnetanordnungen 10 im wesentlichen aus einem Hohlkörper mit U-Profil besteht, so daß er ausreichend Platz bietet. Dadurch gelingt es, auf die Verkabelung 27 weitgehend zu verzichten, da praktisch nur noch die zum Bordnetz führende Leitung 26 sowie etwa benötigte Leitungen für Steuerungs- und Diagnoseaufgaben aus dem Magnetrücken 15 herausgeführt werden brauchen. Alle übrigen Leitungen können im Magnetrücken 15 verlaufen und von dort auf kürzestem Weg zu den Spaltsensoren 19 sowie den Wicklungen 12 und 23 geführt werden. Daraus folgt, dass die gesamte Magnetanordnung 10 einschließlich der Magnetpole 11, des Regelkreises 18, der Energieversorgungseinheit 23, 24 und der Verkabelung eine autonome, mechatronische Baueinheit bildet, in die alle für die Schwebefähigkeit erforderlichen Funktionalitäten integriert sind. Bei Bedarf können zusätzlich Pufferbatterien im Magnetrücken 15 untergebracht sein, die beim Stillstand oder bei zu langsamer Fahrt des Magnetschwebefahrzeugs 1 die erforderliche Energie liefern.

Der in Fig. 2 gezeigte Modul weist außer der Magnetanordnung 10 für die Funktion "Tragen" eine weitere Magnetanordnung 10a mit Magnetpolen 32 für die Funktion "Führen" auf. Die Magnetanordnung 10a ist in der Nähe eines Magnetrückens 15a (Fig. 3) vorgesehen und zweckmäßig innerhalb desselben Rastermaßes von z. B. 3096 mm untergebracht, das auch für die Magnetanordnung 10 gilt. Den Magnetenpolen 32 sind analog zu den Spaltsensoren 19 ausgebildete weitere Spaltsensoren 19a zugeordnet, die mit weiteren, nicht dargestellten und wie die Regelkreise 18 ausgebildeten Regelkreisen verbunden sind, die dem Zweck dienen, den Spalt 7a zwischen den Magnetpolen 32 und der Seitenführschiene 8 (Fig. 1) konstant zu halten. Für die weiteren Regelkreise gilt im wesentlichen dasselbe, wie oben anhand der Regelkreise 18 beschrieben wurde. Die Energieversorgung dieser Regelkreise erfolgt dabei zweckmäßig mit Hilfe der Energieversorgungseinheiten 23 und 24, da die Führmagnete normalerweise keine Wicklungen von Lineargeneratoren aufweisen. Anders als bei der Magnetanordnung 10 sind bei der Magnetanordnung 10a nur drei Magnetpole 32 vorhanden, die durch zwei Reihen von je drei Wicklungen gebildet werden.

Die für die Funktion "Tragen" bestimmte Magnetanordnung 10 besitzt zwölf Magnet- pole 11, die in zwei Gruppen von je sechs unmittelbar nebeneinander liegenden Magnetpolen eingeteilt sind. Dabei wird jede dieser Gruppen durch je einen Regelkreis 18 geregelt und zweckmäßig auch durch je eine der Gruppe einzeln zugeordnete Energieversorgungseinheit 23, 24 mit Strom versorgt. Dadurch wird einerseits der Vorteil erzielt, dass beim Ausfall einer Gruppe die jeweils andere Gruppe weiter arbeitet. Andererseits wird der zugehörige Schweberahmen 16 mit seinen biegesteifen Längs- und Querverbindern beim Ausfall einer Gruppe durch eine zugeordnete Gruppe einer benachbarten Magnetanordnung, die dann vorzugsweise mit einem entsprechend höheren Strom beaufschlagt wird, in seiner Lage gehalten, ohne dass das Magnetschwebefahrzeug 1 auf eine Gleitschiene abgesetzt wird oder die Magnetanordnung 10 an den Langstator anschlägt. Allerdings ergeben sich dadurch die beiden folgenden Nachteile.

Ein erster Nachteil der gruppenweisen Zusammenfassung von je sechs Magnetpolen 11 besteht darin, dass in ihren Wicklungen 12 vergleichsweise hohe Spannungen auftreten können. Diese werden vor allem durch kapazitive Spannungsüberhöhungen verursacht, die sich aufgrund der Herstellung der Wicklungen der Magnetpole 11 aus Leitungsbändern und die dadurch erzeugten, parasitären Kapazitäten ergeben. Die aus den Induktivitäten der Wicklungen und den parasitären Kapazitäten gebildeten elektrischen Schwingkreise führen bei der Anregung der Magnetanordnung 10 zu Resonanzschwingungen, die so hohe Spannungen und Ströme zur Folge haben können, daß Isolationsschäden auftreten. Ein weiterer Nachteil ist, dass die Regelkreise 18 mit besonderen Sicherheitseinrichtungen versehen werden müssen, die beim fehlerhaften Arbeiten eines Stellgliedes 22 (Fig. 4) verhindern, dass die zugeordnete Gruppe von Magnetpolen 11 an den Langstator anschlägt.

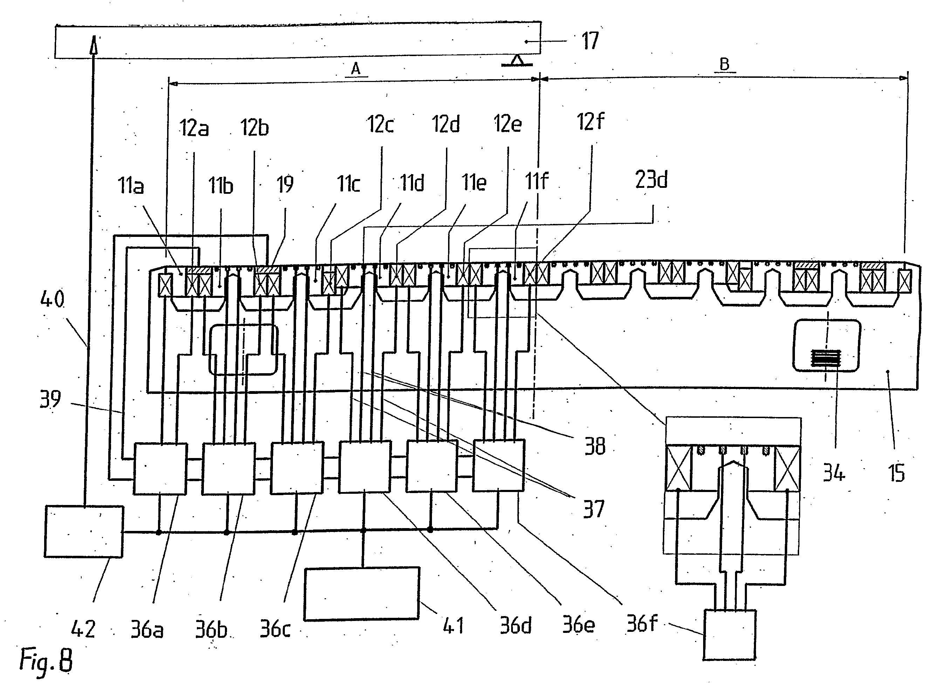

Erfindungsgemäß wird zur Vermeidung dieser Nachteile vorgeschlagen, dass jede Gruppe nur einen Magnetpol 11 oder höchstens zwei Magnetpole 11 enthält. Eine derartige Aufteilung der Magnetpole 11 ist in Fig. 6 bis 8 dargestellt. Die Magnetanordnung 10 enthält hier zwölf Magnetpole 11a bis 11l mit Wicklungen 12a usw., nur teilweise dargestellten Spaltsensoren 19 sowie den Wicklungen 23 des Lineargenerators. Außerdem sind wie in Fig. 2 der Magnetrücken 15 und die Einschübe 30 angedeutet, die die Regelkreise 18 und Energieversorgungseinheiten enthalten, wobei allerdings die in den Einschüben 30 enthaltenen Komponenten zum besseren Verständnis in Fig. 8 unterhalb des Magnetrückens 15 dargestellt sind. Mit dem Bezugszeichen 34 sind Ausnehmungen angedeutet, in die die Enden der Gestellbügel 6 nach Fig. 1 und 2 eintreten. Weiter zeigt Fig. 6 die in Fig. 2 nicht sichtbaren Polrücken 35, die die Kerne 14 der Magnetpole 11 miteinander verbinden. Schließlich zeigen Fig. 6 und 8, dass je sechs Magnetpole 11a bis 11f bzw. 11g bis 11l je einen Halbmagneten A bzw. B bilden, die in bekannter Weise mechanisch mit dem Schweberahmen 16 für den Wagenkasten 17 (Fig. 1) des Magnetschwebefahrzeugs 1 gekoppelt sind.

Elektrisch werden die Magnetpole 11, wie Fig. 8 zeigt, jeweils einzeln und unabhängig voneinander gesteuert. Dazu ist im Halbmagneten A jedem Magnetpol 11a bis 11f je eine Magnetpoleinheit 36a bis 36f zugeordnet, die je einen zugehörigen Regelkreis 18 und einen zugehörigen, mit einem Hochsetzsteller od. dgl. versehenen Spannungswandler 24 gemäß der obigen Beschreibung enthält. Ferner ist jede Magnetpol-Wicklung 12 (z. B. speziell eine Wicklung 12d des Magnetpols 11d) über Leitungen 37 mit einer zugehörigen Magneteinheit (z. B. speziell der Magnetpoleinheit 36d) und dem in ihr enthaltenen Regelkreis 18 und jede Lineargenerator-Wicklung 23 (z. B. speziell eine Wicklung 23d des Magnetpols 11d) über Leitungen 38 mit der zugehörigen Magnetpoleinheit 36d und dem in ihr enthaltenen Spannungswandler 24 gemäß Fig. 4 verbunden. Für alle anderen Magnetpole 11 gilt sinngemäß dasselbe, wie insbesondere die in Fig. 8 vergrößerte Darstellung des Magnetpols 11f zeigt. Außerdem sind die vorhandenen Spaltsensoren 19 über Leitungen 39 mit allen Magnetpoleinheiten 36 verbunden, um deren Regelkreisen 18 die jeweiligen Istwerte des Spalts 7 zu übermitteln. Der andere Halbmagnet B ist entsprechend ausgebildet.

Aufgrund der beschriebenen Anordnung enthält jeder Halbmagnet A, B je sechs Magnetpole 11 mit je einer zugeordneten Magnetpoleinheit 36. Wird daher ein Magnetpol 11 oder die zugehörige Magnetpoleinheit 36 defekt, besteht keine Gefahr, daß die Magnetpolanordnung 10 oder ein Halbmagnet A, B insgesamt ausfällt, da die Nachbar-Magnetpole der defekten Einheit ohne weiteres deren Funktion mit übernehmen können. Daher ist es weder erforderlich, die Regelkreise 18 mit besonderen Sicherungseinrichtungen gegen Fehlsteuerungen der Stellglieder 22 zu versehen, noch treten die schädlichen, kapazitiven Spannungsüberhöhungen auf. Entsprechende Vorteile ergeben sich, wenn die Magnetpole 11 nicht einzeln, sondern paarweise angesteuert werden. Besonders vorteilhaft ist es, daß beim Ausfall irgendeiner Komponente immer nur einer oder höchstens zwei Magnetpole 11, aber nicht sechs oder zwölf Magnetpole 11 eines Halbmagneten oder der ganzen Magnetanordnung 10 ausfallen. Außerdem wird das Spannungsniveau erniedrigt, wodurch die für das Bordnetz vorgesehene Spannung reduziert werden kann.

Im übrigen zeigt Fig. 8 noch eine Besonderheit im Hinblick auf die Magnetpole 11a und 11l, die den Anfang bzw. das Ende der Magnetanordnung 10 bilden.

Da diese Magnetpole 11a, 11l als halbe Pole ausgebildet sind, so daß kein Platz für die Anbringung einer Lineargenerator-Wicklung 23 vorhanden ist, wird die zugehörige Magnetpoleinheit 36a bzw. 36l zweckmäßig vom Bordnetz aus mit Strom versorgt, wie in Fig. 8 durch eine Leitung 40 angedeutet ist.

Entsprechend kann im Hinblick auf die Steuerung der Magnetpole 32 des Führmagneten vorgegangen werden.

Die Erzeugung der Bordenergie mit Hilfe von Lineargeneratoren funktioniert nur in Fahrwegabschnitten, in denen die Geschwindigkeit des Magnetschwebefahrzeugs 1 eine bestimmte Mindestgröße erreicht. In anderen Fahrwegabschnitten erfolgt die Energieerzeugung daher mit Hilfe von am Fahrweg verlegten Stromschienen, denen mechanische oder mechanisch-pneumatische Stromabnehmer 41 (Fig. 8) zugeordnet sind. Die Stromabnehmer 41 sind zusätzlich zu den Wicklungen 23 vorhandene Bestandteile der Energieversorgungseinheit insgesamt und werden entsprechend Fig. 8 bei Einzelpolansteuerung mit jeder einzelnen Magnetpoleinheit 36 verbunden. Außerdem führt der Ausgang des Stromabnehmers 41 über einen geeigneten, z. B. einen Hochsetzsteller enthaltenden Spannungswandler 42 zur Leitung 40. Wie Fig. 2 und 5 zeigen, ist der Stromabnehmer 41 z. B. in dem mit der Verkleidung 28 aerodynamisch abgedeckten Magnetrücken 15 und damit wie die Wicklungen 23 des Lineargenerators in die autonome Baueinheit der Magnetpolanordnung 10 integriert.

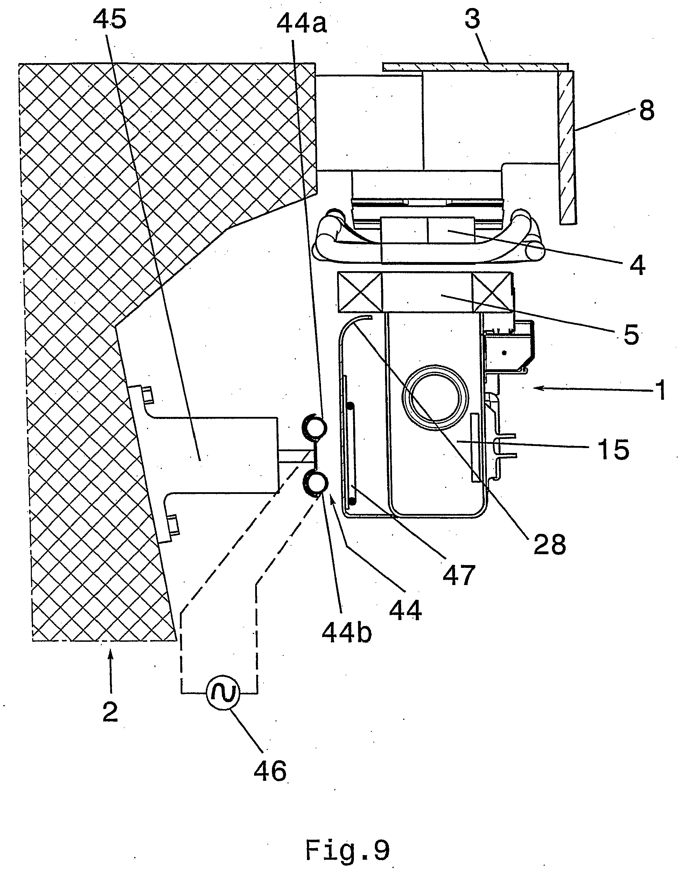

Da Stromschienen und mechanische Stromabnehmer 41 wegen der Verschleißneigung insbesondere bei hohen Geschwindigkeiten nicht immer erwünscht sind, ist nach einem weiteren wesentlichen Merkmal der Erfindung vorgesehen, die Energieübertragung vom Fahrweg 3 auf das Magnetschwebefahrzeug 1 auf eine andere Weise berührungslos und vorzugsweise induktiv zu bewirken. Dies ist insbesondere in Fig. 9 gezeigt, die einen im wesentlichen der Fig. 1 entsprechenden, jedoch vergrößerten schematischen Schnitt zeigt.

Nach Fig. 9 ist an einer Stelle des Fahrwegs, an der bisher die Stromschiene für den Stromabnehmer 41 (Fig. 8) angeordnet ist, ein als Sendespule ausgebildeter Primärleiter 44 vorgesehen, der vorzugsweise je einen hin-und herlaufenden Leitungsabschnitt 44a, 44b enthält und sich zweckmäßig über die gesamte Länge des Fahrwegs 2, 3 erstreckt. Die beiden Leitungsabschnitte 44a, 44b sind z. B. mittels einer aus einem Isolator bestehenden Halterung 45 am Träger 2 befestigt. Der Primärleiter 44 liegt außerdem an einer nur schematisch dargestellten, vorzugsweise hochfrequenten Spannungsquelle 46 von z. B. 300 V.

Am Magnetschwebefahrzeug 1 ist anstelle des Stromabnehmers 41 eine Empfängerspule 47 montiert. Diese ist vorzugsweise so ausgebildet, daß sie den Primärleiter 44 nicht umgreift, sondern diesem mit einem geringen Abstand gegenübersteht. Dadurch ist es möglich, die Empfängerspule 47 wie die übrigen beschriebenen Komponenten der Regelkreise 18 und der Energieversorgungseinheiten erfindungsgemäß im Magnetrücken 15 unterzubringen und mit dessen aus einem elektrisch isolierenden Material bestehender Verkleidung 28 abzudecken oder in diese zu integrieren.

Nach einem besonders bevorzugten Ausführungsbeispiel ist die Halterung 45 in der Weise klappbar ausgebildet, dass der Primärleiter 44 nach oben oder unten schwenkbar am Träger 2 montiert ist und abschnittsweise weggeschwenkt werden kann. Es kann dann vermieden werden, dass der Primärleiter 44 bei Arbeiten, bei denen er im Weg ist, völlig demontiert werden muss.

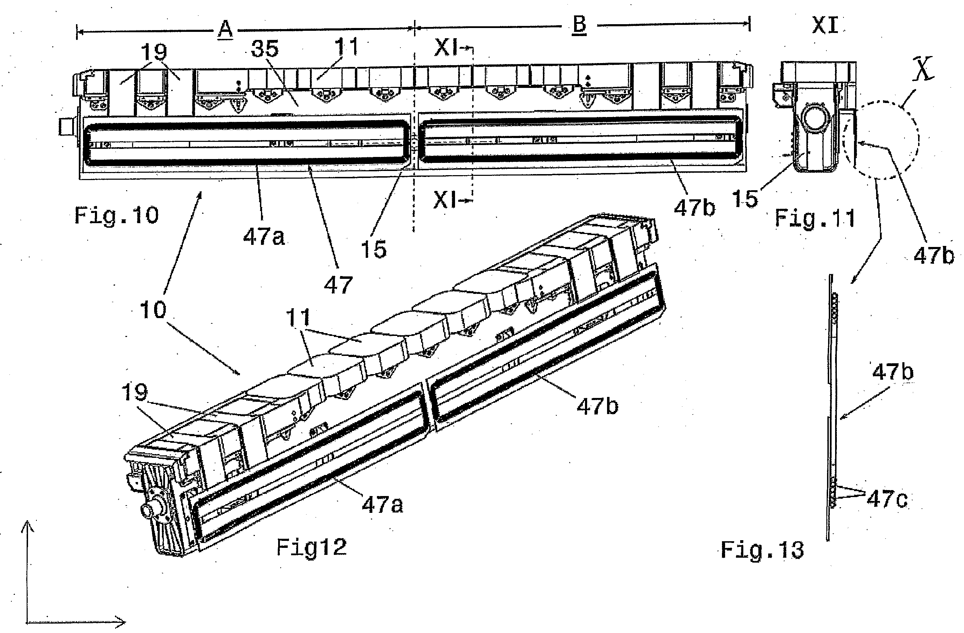

Fig. 10 bis 13 zeigen in einer der Fig. 5 ähnlichen Darstellung die Ausbildung der Empfängerspule 47, die aus Gründen der Redundanz zweckmäßig zwei Hälften 47a und 47b aufweist, die je einem der oben beschriebenen Halbmagneten A, B zugeordnet sind und daher im Ausführungsbeispiel eine Länge von je ca. 1500 mm aufweisen. Dabei besteht jede in Fig. 10 und 12 mit einer dicken Linie dargestellte Hälfte 47a, 47b vorzugsweise aus einer Mehrzahl von parallelen Leitern 47c (Fig. 13), die so relativ zum Primärleiter 44 angeordnet sind, daß sie von den von diesem bzw. den Leitungsabschnitten 44a, 44b erzeugten, konzentrischen magnetischen Feldlinien durchdrungen werden und an ihren nicht dargestellten Anschlussenden die vom Primärleiter 44 gelieferte Spannung von ca. 300 V ausgekoppelt werden kann. Die beiden Anschlussenden können daher analog zu Fig. 8 mit den Magnetpoleinheiten 36 bzw. dem Spannungswandler 42 verbunden werden. Dabei ist klar, daß zweckmäßig an beiden Seiten des Trägers 2 entsprechende Primärleiter 44 verlegt werden, wenn die Magnetschwebefahrzeuge 1 an beiden Längsseiten mit Magnetanordnungen 10, 10a versehen sind. Die Empfängerspule 47 wird vorzugsweise als vorgefertigte Baugruppe gemeinsam mit den notwendigen Kontaktierungselementen, z. B. Steckverbindern, hergestellt und am Magnetrücken 15 oder der Verkleidung 28 so montiert bzw. in diese integriert, dass sie ein Teil der von der Magnetanordnung 10 gebildeten autonomen Baueinheit bildet.

Ein wesentlicher Vorteil der berührungslosen Energieübertragung besteht darin, daß sie mechanisch verschleißfrei arbeitet und die ausgekoppelte Energie wie bei Anwendung einer Stromschiene von der Fahrtgeschwindigkeit unabhängig ist. Außerdem ergibt sich vielfache Redundanz, da pro Magnetanordnung 10 je zwei Spulenhälften 47a, 47b vorhanden sind. Weiter können die Wicklungen 23 des Lineargenerators und bei entsprechender Auslegung sogar die Hochsetzsteller und Bordbatterien entfallen. Eine etwaige Notstromversorgung könnte dann mit einfachen Bleibatterien sichergestellt werden.

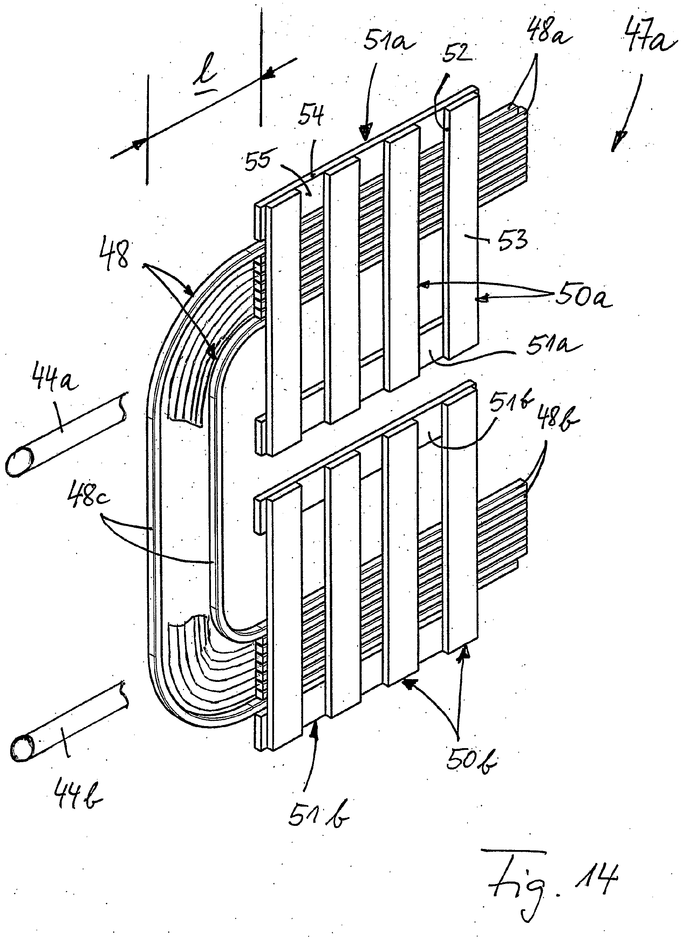

Die Empfängerspule 47 bzw. die Wicklungshälften 47a, 47b sind vorzugsweise nach Art von sog. Lagenwicklungen ausgebildet. Sie enthalten, wie Fig. 13, 14 und 15 für die Wicklungshälfte 47a zeigen, eine Mehrzahl von in einer Ebene liegenden Lagen 48. Die einzelnen Lagen 48 sind vorzugsweise aus einem Leiter mit rundem oder quadratischem Querschnitt hergestellt und weisen parallel zueinander und längs der Magnetanordnung 10 (Fig. 12) erstreckte, im wesentlichen geradlinige, erste bzw. zweite Längsabschnitte 48a, 48b sowie deren Enden verbindende Wicklungsköpfe 48c auf. Die Längsabschitte 48a, 48b verlaufen parallel zu den Leitungsabschnitten 44a, 44b des Primärleiters 44 und dienen der Spannungserzeugung. Dabei sind die ersten Längsabschnitte 48a dem Leitungsabschnitt 44a und die zweiten Längsabschnitte 48b dem Leitungsabschnitt 44b des Primärleiters 44 derart zugeordnet, dass die Leitungsabschnitte 44a, 44b jeweils etwa in der Mitte des von den zugeordneten Längsabschnitten 48a, 48b gebildeten Lagenteils angeordnet sind, wie insbesondere Fig. 14 zeigt. Demgegenüber verlaufen die Leiter der Wicklungshälfte 47a im Bereich der Wicklungsköpfe 48c im wesentlichen senkrecht zu den Leitungsabschnitten 44a bzw. 44b, so dass sie einerseits nicht oder zumindest nicht wesentlich zur Spannungsbildung beitragen und andererseits einen vergleichsweise großen Platzbedarf entsprechend einem Maß 1 in Fig. 14 in Längsrichtung der Magnetanordnung 10 haben. Da die Wicklungsköpfe 48c außerdem aus praktischen Gründen nicht über die Längsenden der Magnetanordnungen 10 hinausragen können (Fig. 12), bringen sie den Nachteil mit sich, daß sie die wirksame Länge der zur Spannungserzeugung vorgesehenen Längsabschnitte 48a, 48b reduzieren und daher eine optimale Spannungserzeugung behindern.

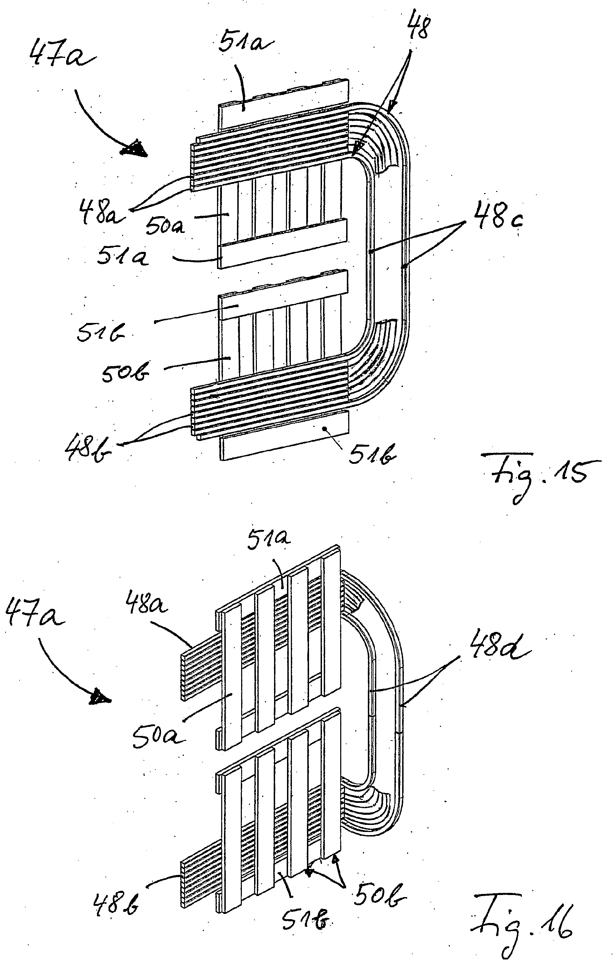

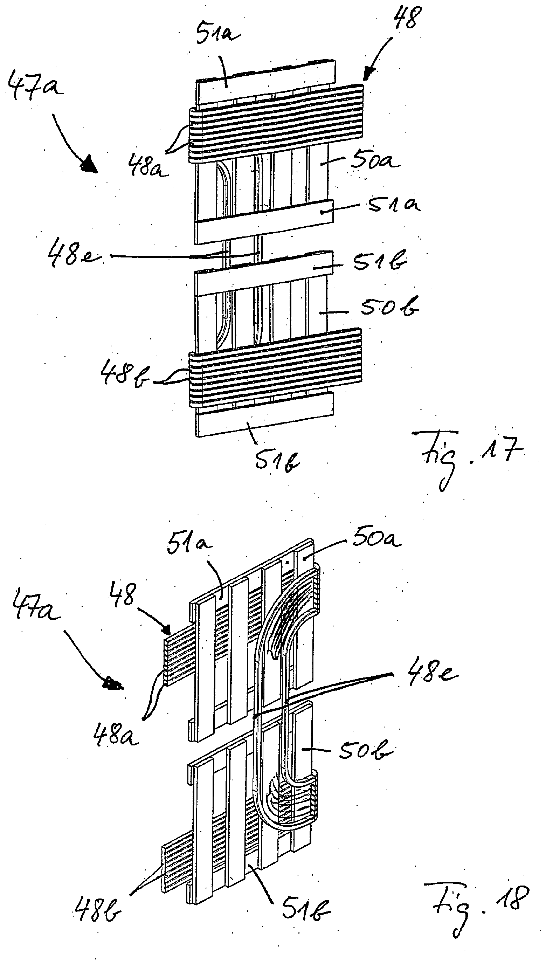

Zur Vermeidung dieses Nachteils ist erfindungsgemäß vorgesehen, die Empfängerspule 47 bzw. deren Hälften 47a, 47b im Bereich der Wicklungsköpfe 48c aus der von den Längsabschnitten 48a, 48b gebildeten Wicklungsebene heraus nach hinten zu biegen bzw. abzuwinkeln. Dies ist in Fig. 16 für um ca. 90° abgewinkelte Wicklungsköpfe 48d und in Fig. 17 und 18 für um ca. 180° abgewinkelte Wicklungsköpfe 48e schematisch dargestellt. Da die Empfängerspule 47 gemäß Fig. 9 und 12 an der dem Primärleiter 44 zugewandten Vorderseite des Magnetrückens 15 montiert ist, kommen die Wicklungsköpfe 48d dadurch senkrecht zur Vorderseite des Magnetrückens 15 zu liegen, weshalb dieser mit entsprechenden Ausnehmungen bzw. Schlitzen versehen wird, die die abgewinkelten Wicklungsköpfe 48d aufnehmen. Bei den um 180 umgebogenen Wicklungsköpfen 48e können diese Ausnehmungen entsprechend flacher ausgebildet werden.

Da die einzelnen Lagen 48 der Empfängerspule 47 bzw. deren Hälften 47a, 47b parallel zur Wicklungsebene sämtlich übereinander liegen, kann jede einzelne Lage 48 an derselben Stelle gebogen werden, ohne daß benachbarte Lagen 48 diesen Vorgang behindern. Dadurch ergibt sich eine vergleichsweise scharfe Knickstelle für die ganze Wicklung mit der Folge, dass die Längsabschnitte 48a, 48b der Empfängerspule 47 bzw. der Wicklungshälften 47a, 47b praktisch über die ganze Länge der Magnetanordnung 10 erstreckt und damit jeweils um ein Maß 2 - l länger als in Fig. 14 ausgebildet werden können. Dabei versteht sich, dass die in Fig. 16 bis 18 gezeigten Abwinklungen um 90° bzw. 180° zwar besonders bevorzugte Ausführungsbeispiele darstellen, aber auch Abwinklungen um andere Winkel, insbesondere um Winkel zwischen 90 und 180 möglich sind. Außerdem können die Wicklungsköpfe 48c je nach Anordnung und Ausbildung der Magnetanordnung 10 auch zur entgegengesetzten Seite hin gebogen sein. Schließlich ermöglicht es die Erfindung, die Empfängerspule 47 aus mehr als zwei Teilen 47a, 47b zusammenzusetzen, ohne dass dadurch die Gesamtlänge der beteiligten Längsabschnitte 48a, 48b wesentlich verringert wird. Beim Vorhandensein einer Vielzahl von Magnetanordnungen 10 und/oder Empfängerspulen 47 längs des Magnetschwebefahrzeugs wird dadurch die wirksame Länge der Leitungsabschnitte 48a, 48b beträchtlich vergrößert.

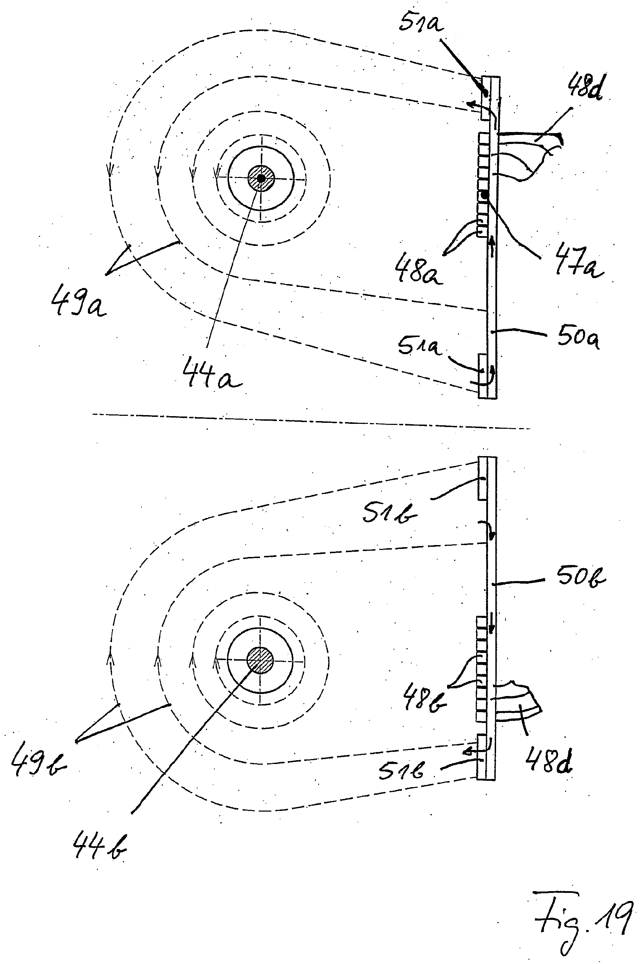

Die aus Fig. 14 bis 18 ersichtliche Anordnung führt zu einer vergleichsweise kleinen magnetischen Kopplung zwischen dem Primärleiter 44 und der Empfängerspule 47 bzw. den Leitungsabschnitten 44a, 44b und den Längsabschnitten 48a und 48b. Außerdem besteht die Gefahr von Wirbelstromverlusten in hinter der Empfängerspule 47 angeordneten, aus Metall bestehenden Bauteilen des Magnetrückens 15 (Fig. 9). Es ist daher bereits vorgeschlagen worden, auf einer vom Primärleiter 44 abgewandten Seite der Empfängerspule 47 ein Mittel zur Konzentration der vom Primärleiter 44 erzeugten, schematisch in Fig. 19 angedeuteten, magnetischen Feldlinien 49a, 49b vorzusehen. Dieses Mittel enthält insbesondere Bauteile, die aus einem Material mit hoher Permeabilität und hohem elektrischen Widerstand bestehen. Ein besonders bevorzugtes Material für diesen Zweck ist Ferrit, insbesondere Weichferrit, das allerdings wegen seiner Herstellung aus ferrimagnetischen Pulvern durch Pressen und nachfolgendes Sintern vergleichsweise spröde, mechanisch empfindlich und daher schlecht bearbeitbar ist. Bei der bereits vorgeschlagenen Anordnung wird das Mittel zur Konzentration der Feldlinien daher nicht aus großflächigen, plattenförmigen Elementen, sondern aus einer Vielzahl von vergleichsweise kleinen Materialstreifen und Verbindungselementen zusammengesetzt, die durch Kleben oder sonstwie zu Gitterrahmen miteinander verbunden werden und für die Zwecke der vorliegenden Erfindung mechanisch ausreichend stabil sind. Dabei ist für den Fall, dass die Empfängerspule 47 aus wenigstens zwei Hälften 47a, 47b besteht und jede Hälfte mit ihren Längsabschnitten 48a, 48b je einem der beiden Leitungsabschnitte 44a bzw. 44b gegenübersteht (Fig. 9 und 12), für jede Hälfte 47a, 47b jeweils dieselbe Anordnung vorgesehen. Ist eine einteilige Empfängerspule 47 vorgesehen, gilt für diese sinngemäß dasselbe. Daher wird nachfolgend nur die für eine Wicklungshälfte 47a vorgesehene Anordnung näher erläutert.

Bei einem ebenfalls aus Fig. 14 bis 18 ersichtlichen und zusätzlich in Fig. 19 dargestellten, derzeit für am besten gehaltenen Ausführungsbeispiel der Erfindung ist auf einer vom Leitungsabschnitt 44a abgewandten Seite der Wicklungshälfte 47a eine Mehrzahl von ersten Materialstreifen 50a vorgesehen, die im wesentlichen senkrecht zum Leitungsabschnitt 44a und parallel zu der von den Längsabschnitten 48a gebildeten Wicklungsebene angeordnet sind. An einer vom Leitungsabschnitt 44b abgewandten Seite der Wicklungshälfte 47a ist bei entsprechender Anordnung eine Mehrzahl von zweiten Materialstreifen 50b vorgesehen, die zweckmäßig in derselben Ebene wie die ersten Materialstreifen 50a liegen. Beide Materialstreifen 50a, 50b haben eine Länge, die etwas grösser ist, als der Höhe der von den Längsabschnitten 48a, 48b gebildeten Lagenteile entspricht, ohne dass sie sich mit den einander zugewandten Enden überlappen. Die einzelnen Materialstreifen 50a, 50b sind jeweils gitterartig und mit vorgewählten Abständen parallel zueinander angeordnet.

Die Enden der ersten Materialstreifen 50a sind durch erste Verbindungselemente 51 a miteinander verbunden, die im wesentlichen parallel zum Leitungsabschnitt 44a angeordnet sind. Entsprechend sind die Enden der zweiten Materialstreifen 50b durch zweite Verbindungselemente 51b verbunden. Dadurch entstehen nach Art von Gitterrahmen ausgebildete Bauelemente, die in nicht näher dargestellter Weise an den Magnetrücken 15 befestigt werden.

Sowohl die Materialstreifen 50a, 50b als auch die Verbindungselemente 51a und 51b, die beispielsweise durch Kleben miteinander verbunden sind, bestehen vorzugsweise aus einem Ferrit. Sie sind außerdem zweckmäßig dicht hinter den Längsabschnitten 48a, 48b und so angeordnet, dass sie eine Konzentration der von den Leitungsabschnitten 44a, 44b erzeugten Feldlinien 49a bzw. 49b bewirken, wie in Fig. 19 schematisch angedeutet ist. Dabei ist in Fig. 19 angenommen, dass der Leitungsabschnitt 44a momentan in einer aus der Zeichenebene heraustretenden Richtung und der Leitungsabschnitt 44b momentan in einer in die Zeichenebene eintretenden Richtung vom Strom durchflossen ist. Wegen der hohen Permeabilität der Materialstreifen 50a, 50b werden die Feldlinien 49a, 49b unmittelbar hinter den Leitungsabschnitten 48a, 48b geschlossen, wie in Fig. 19 schematisch durch Pfeile angedeutet ist, wodurch die magnetische Kopplung stark erhöht wird, was für die Spannungserzeugung günstig ist. Gleichzeitig wird wegen des hohen elektrischen Widerstandes der Materialstreifen 50a, 50b vermieden, daß sich größere Wirbelstromverluste ergeben, zumal die Materialstreifen 50a, 50b und Verbindungselemente 51a, 51b die hinter ihnen liegenden Teile der Magnetrücken 15 magnetisch abschirmen. Schließlich bewirken die Verbindungselemente 51a, 51b eine weitgehend gleichförmige Verteilung des magnetischen Flusses innerhalb der Gitterrahmenstruktur. Dabei ist die Länge der Materialstreifen 50a, 50b und der Verbindungselemente 51a, 51b so gewählt, dass möglichst viele der Feldlinien 49a, 49b gesammelt bzw. konzentriert werden.

Sowohl die Materialstreifen 50a, 50b als auch die Verbindungselemente 51a, 51b besitzen vorzugsweise rechteckige Querschnitte und dadurch Schmal- und Breitseiten 52, 53 bzw. 54 und 55, die in Fig. 14 schematisch angedeutet sind. Dabei sind die Breitseiten 53,55 vorzugsweise parallel zur Wicklungsebene angeordnet. Außerdem liegen die Verbindungselemente 51a, 51b erfindungsgemäß mit ihren Breitseiten 55 an den Breitseiten 53 der Materialstreifen 50a, 50b an, wodurch vergleichsweise große Verbindungs- bzw. Stoßflächen und trotz der unvermeidbaren Luftspalte vergleichsweise kleine magnetische Übergangswiderstände erhalten werden, was zu einer weiteren Verbesserung der magnetischen Kreise führt. Bei einer Befestigung der Verbindungselemente 51a, 51b auf den den Leitungsabschnitten 44a, 44b zugewandten Seiten der Materialstreifen 50a, 50b ergibt sich außerdem der Vorteil, daß die Verbindungselemente 51a, 51b im wesentlichen in derselben Ebene wie die Längsabschnitte 48a, 48b der Wicklungshälfte 47a zu liegen kommen, wie insbesondere Fig. 19 zeigt. Dadurch entsteht für sie kein zusätzlicher Raumbedarf, insbesondere wenn ihre Dicke, was in magnetischer Hinsicht ausreicht, nicht grösser als die Dicke der Längsabschnitte 48a, 48b ist. Die Materialstreifen 50a, 50b und Verbindungselemente 51a, 51b bestehen beispielsweise aus Ferritstäben mit einer Länge von höchstens 100 mm, einer Breite von höchstens 15 mm und einer Dicke von höchstens 3 mm. Bei einem Abstand der Leitungsabschnitte 44a, 44b voneinander von ca. 150 mm und einer Höhe der aus den Längsabschnitten 48a, 48b gebildeten Lagenteile von je ca. 30 mm bei z. B. zehn Lagen kann die Länge der Materialstreifen 50a, 50b z. B. 100 mm und ihr gegen- seitiger Abstand parallel zum Primärleiter 44 z. B. 15 mm betragen. Der Abstand der Empfängerspule 47 vom Primärleiter 44 beträgt in diesem Fall z. B. 40 mm. Außerdem ist klar, daß in Längsrichtung der Längsabschnitte 48a, 48b mehrere aus den Materialstreifen 50 und den Verbindungselementen 51 gebildete Gitterrahmen hinter- einander angeordnet sein können, wenn die Wicklungshälften 47a, 47b wesentlich länger als die problemlos verarbeitbaren Längen der Verbindungselemente 51 sind.

Die Erfindung ist nicht auf die beschriebenen Ausführungsbeispiele beschränkt, die auf vielfache Weise abgewandelt werden können. Dies gilt insbesondere für die Zahl der pro Magnetschwebefahrzeug insgesamt vorhandenen Magnetanordnungen 10, 10a und den Aufbau von Modulen aus den Magnetanordnungen 10, 10a zu Tragmagneten, Führmagneten oder Kombinationen von Trag-und Führmagneten. Weiter kann die Zahl der Magnetpole 11,32 pro Trag- oder Führmagnet anders als beschrieben gewählt werden. Schließlich versteht sich, daß die verschiedenen Merkmale auch in anderen als den dargestellten und beschriebenen Kombinationen angewendet werden können.

## Patentansprüche

1. Vorrichtung zur Übertragung elektrischer Energie vom Fahrweg (2, 3) auf das Fahrzeug (1) einer Magnetschwebebahn, wobei das Fahrzeug (1) wenigstens eine Magnetanordnung (10) enthält, die an einem mit einem Wagenkasten (17) verbundenen Magnetrücken (15) befestigt ist, wobei am Fahrweg (2, 3) wenigstens ein an eine Spannungsquelle (46) angeschlossener, als Sendespule ausgebildeter Primärleiter (44) und am Fahrzeug (1) wenigstens eine am Magnetrücken (5) montierte Empfängerspule (47) vorgesehen sind, **dadurch gekennzeichnet, dass** die Empfängerspule (47) nach Art einer in einer Wicklungsebene angeordneten Lagenwicklung ausgebildet ist, die parallel zum Primärleiter (44) erstreckte Längsabschnitte (48a, 48b) und diese verbindende Wicklungsköpfe (48d, 48e) aufweist wobei die Empfängerspule (47) innerhalb einer Verkleidung (28) des Magnetrückens (15) montiert ist und den Primärleiter (44) nicht umgreift.

2. Vorrichtung nach Anspruch 1, **dadurch gekennzeichnet, daß** die Empfängerspule (47) wenigstens zwei Wicklungshälften (47a, 47b) aufweist, die je einer Hälfte der Magnetanordnung (10) zugeordnet sind.

3. Vorrichtung nach Anspruch 1 oder 2, **dadurch gekennzeichnet, daß** die Empfängerspule (47) ein Bestandteil einer ebenfalls im Magnetrücken (15) untergebrachten Energieversorgungseinheit ist.

4. Vorrichtung nach Anspruch 3, **dadurch gekennzeichnet, daß** die Energieversorgungseinheit einen zwischen der Empfängerspule (47) und der Magnetanordnung (10) angeordneten Spannungswandler (24) aufweist.

5. Vorrichtung nach einem der Ansprüche 1 bis 4, **dadurch gekennzeichnet, daß** die Empfängerspule (47) als eine vorgefertigte, mit erforderlichen Kontaktierungselementen versehene Baugruppe ausgebildet ist und der Magnetrücken (15) mit den Kontaktierungselementen zusammenwirkende Kontaktmittel sowie zur Aufnahme der Baugruppe bestimmte Steck- und/oder Einschubmittel aufweist.

6. Vorrichtung nach einem der Ansprüche 1 bis 5, **dadurch gekennzeichnet, daß** die Wicklungsköpfe (48d, 48e) aus der Wicklungsebene heraus abgewinkelt sind.

7. Vorrichtung nach Anspruch 6, **dadurch gekennzeichnet, daß** die Wicklungsköpfe (48d, 48e) um Winkel von ca. 90° bis 180° abgewinkelt sind.

8. Vorrichtung nach einem der Ansprüche 1 bis 7, **dadurch gekennzeichnet, daß** die Längsabschnitte (48a, 48b) und Wicklungsköpfe (48d, 48e) aus Leitern mit runden oder quadratischen Querschnitten bestehen.

9. Vorrichtung nach einem der Ansprüche 1 bis 8, **dadurch gekennzeichnet, daß** auf einer vom Primärleiter (44) abgewandten Seite der Empfängerspule (47) eine Mehrzahl von Materialstreifen (50a, 50b) vorgesehen ist, die im Wesentlichen senkrecht zum Primärleiter (44) und parallel zur Wicklungsebene angeordnet sind und der Konzentration von Feldlinien (49a, 49b) dienen, die vom Primärleiter (44) erzeugt werden, wobei die Materialstreifen (50a, 50b) an ihren Enden durch parallel zum Primärleiter (44) angeordnete, im Wesentlichen in der Wicklungsebene angeordnete Verbindungselemente (51a, 51b) verbunden sind, die auf den Enden der Materialstreifen (50a, 50b) aufliegen, und wobei die Materialstreifen (50a, 50b) und die Verbindungselemente (51a, 51b) aus Materialien mit einer im Vergleich zu Luft hohen Permeabilität bestehen.

10. Vorrichtung nach Anspruch 9, **dadurch gekennzeichnet, daß** die Materialstreifen (50a, 50b) und die Verbindungselemente (51a, 51b) rechteckige Querschnitte und dadurch Schmal- und Breitseiten (52, 54 bzw. 53, 55) aufweisen, wobei die Breitseiten (53, 55) parallel zur Wicklungsebene angeordnet sind, und daß die Verbindungselemente (51a, 51b) mit ihren Breitseiten (55) den Breitseiten (53) der Materialstreifen (50a, 50b) aufliegen.

11. Vorrichtung nach Anspruch 9 oder 10, **dadurch gekennzeichnet, daß** der Primärleiter (44) zwei Leitungsabschnitte (44a, 44b) aufweist, die dazu dienen, in entgegengesetzter Richtung vom Strom durchflossen zu werden, und denen je ein Teil der Längsabschnitte (48a, 48b) der Empfängerspule (47) bzw. deren Hälften (47a, 47b) zugeordnet ist, und daß jeder dieser Teile in einem mittleren Bereich von zugeordneten Materialstreifen (50a, 50b) angeordnet ist.

12. Vorrichtung nach einem der Ansprüche 9 bis 11, **dadurch gekennzeichnet, daß** die Materialstreifen (50a, 50b) und die Verbindungselemente (51a, 51b) aus einem Ferrit bestehen.

## Claims

1. A device for transferring electrical energy from the track (2, 3) to the vehicle (1) in a magnetic levitation railway, wherein the vehicle (1) contains at least one magnet assembly (10) which is secured to a magnet back (15) connected to a vehicle body (17), wherein on the track (2, 3) at least one primary conductor (44) configured as a transmitting coil attached to a voltage source (46) and on the vehicle (1) at least one receiver coil (47) mounted on the magnet back (5) are provided, **characterized in that** the receiver coil (47) is configured in the manner of a layer winding arranged in a winding plane which has longitudinal sections (48a, 48b) extended parallel to the primary conductor (44) and winding heads (48d, 48e) connecting said longitudinal sections, wherein the receiver coil (47) is mounted within a casing (28) of the magnet back (15) and does not enclose the primary conductor (44).

2. The device according to claim 1, **characterized in that** the receiver coil (47) has at least two winding halves (47a, 47b) which are each assigned to half of the magnet assembly (10).

3. The device according to claim 1 or 2, **characterized in that** the receiver coil (47) is a constituent of an energy supply unit likewise housed in the magnet back (15).

4. The device according to claim 3, **characterized in that** the energy supply unit has a voltage transformer (24) arranged between the receiver coil (47) and the magnet assembly (10).

5. The device according to one of claims 1 to 4, **characterized in that** the receiver coil (47) is configured as a prefabricated subassembly provided with the necessary contacting elements and the magnet back (15) has contact means interacting with the contacting elements and also plug-in and/or insertion means intended to receive the subassembly.

6. The device according to one of claims 1 to 5, **characterized in that** the winding heads (48d, 48e) are bent away out of the winding plane.

7. The device according to claim 6, **characterized in that** the winding heads (48d, 48e) are bent at angles of approx. 90° to 180°.

8. The device according to one of claims 1 to 7, **characterized in that** the longitudinal sections (48a, 48b) and winding heads (48d, 48e) are made of conductors with round or rectangular cross sections.

9. The device according to one of claims 1 to 8, **characterized in that** a plurality of material strips (50a, 50b) is provided on a side of the receiver coil (47) facing away from the primary conductor (44) which are arranged substantially perpendicular to the primary conductor (44) and parallel to the winding plane and are used for the concentration of field lines (49a, 49b) which are produced by the primary conductor (44), wherein the material strips (50a, 50b) are connected at their ends by connection elements (51a, 51b) arranged parallel to the primary conductor (44) substantially in the winding plane which lie at the ends of the material strips (50a, 50b) and wherein the material strips (50a, 50b) and the connection elements (51a, 51b) are made of materials with a high permeability in comparison with air.

10. The device according to claim 9, **characterized in that** the material strips (50a, 50b) and the connection elements (51a, 51b) have rectangular cross sections and therefore narrow and wide sides (52, 54 or 53, 55), wherein the wide sides (53, 55) are arranged parallel to the winding plane, and that the connection elements (51a, 51b) lie with their wide sides (55) on the wide sides (53) of the material strips (50a, 50b).

11. The device according to claim 9 or 10, **characterized in that** the primary conductor (44) has two line sections (44a, 44b) which are used to be flowed through by the current in the opposite direction and to which a part of the longitudinal sections (48a, 48b) of the receiver coil (47) or halves (47a, 47b) thereof is assigned in each case and that each of these parts is arranged in a centre region of allocated material strips (50a, 50b).

12. The device according to one of claims 9 to 11, **characterized in that** the material strips (50a, 50b) and the connection elements (51a, 51b) are made of a ferrite.

## Revendications

1. Dispositif pour la transmission d'énergie électrique de la voie de circulation (2, 3) au véhicule (1) d'un train à sustentation magnétique, dans lequel le véhicule (1) contient au moins un ensemble à aimant (10) qui est fixé à un dos d'aimant (15) relié à une caisse de wagon (17), dans lequel on prévoit, au niveau de la voie de circulation (2, 3), au moins un conducteur primaire (44), réalisé en tant que bobine émettrice, raccordé à une source de tension (46) et au niveau du véhicule (1), au moins une bobine réceptrice (47) montée sur le dos d'aimant (5), **caractérisé en ce que** la bobine réceptrice (47) est réalisée à la manière d'un bobinage en couches disposé dans un plan de bobinage qui présente des parties longitudinales (48a, 48b) étendues parallèlement au conducteur primaire (44) et des tête de bobinage (48d, 48e) reliant celles-ci, dans lequel la bobine réceptrice (47) est montée à l'intérieur d'un revêtement (28) du dos d'aimant (15) et n'entoure pas le conducteur primaire (44).

2. Dispositif selon la revendication 1, **caractérisé en ce que** la bobine réceptrice (47) présente au moins deux moitiés de bobinage (47a, 47b) respectivement associées à une moitié de l'ensemble à aimant (10).

3. Dispositif selon la revendication 1 ou 2, **caractérisé en ce que** la bobine réceptrice (47) est une partie constitutive d'une unité d'alimentation en énergie également logée dans le dos d'aimant (15).

4. Dispositif selon la revendication 3, **caractérisé en ce que** l'unité d'alimentation en énergie présente un convertisseur de tension (24) disposé entre la bobine réceptrice (47) et l'ensemble à aimant (10).

5. Dispositif selon l'une des revendications 1 à 4, **caractérisé en ce que** la bobine réceptrice (47) est réalisée en tant module préfabriqué doté d'éléments de mise en contact nécessaires, et que le dos d'aimant (15) présente des moyens de contact coopérant avec les éléments de mise en contact ainsi que des moyens d'enfichage et/ou d'insertion destinés à la réception du module.

6. Dispositif selon l'une des revendications 1 à 5, **caractérisé en ce que** les têtes de bobinage (48d, 48e) sont coudées à partir du plan de bobinage.

7. Dispositif selon la revendication 6, **caractérisé en ce que** les têtes de bobinage (48d, 48e) sont coudées selon un angle de près de 90° à 180°.

8. Dispositif selon l'une des revendications 1 à 7, **caractérisé en ce que** les parties longitudinales (48a, 48b) et les têtes de bobinage (48d, 48e) se composent de conducteurs avec des sections transversales rondes ou carrées.

9. Dispositif selon l'une des revendications 1 à 8, **caractérisé en ce que**, sur un côté de la bobine réceptrice (47) tournant le dos au conducteur primaire (44), on prévoit une pluralité de bandes de matériau (50a, 50b) qui sont sensiblement disposées perpendiculairement au conducteur primaire (44) et parallèlement au plan de bobinage et servent à la concentration de lignes de champ (49a, 49b) qui sont générées par le conducteur primaire (44), dans lequel les bandes de matériau (50a, 50b) sont reliées à leurs extrémités par des éléments de raccordement (51a, 51b) disposés parallèlement au conducteur primaire (44), disposés sensiblement dans le plan de bobinage, lesquels reposent sur les extrémités des bandes de matériau (50a, 50b), et dans lequel les bandes de matériau (50a, 50b) et les éléments de raccordement (51a, 51b) se composent de matériaux avec une perméabilité élevée en comparaison avec l'air.

10. Dispositif selon la revendication 9, **caractérisé en ce que** les bandes de matériau (50a, 50b) et les éléments de raccordement (51a, 51b) présentent des sections transversales rectangulaires et de ce fait, des côtés étroits et larges (52, 54 ou 53, 55), dans lequel les côtés larges (53, 55) sont disposés parallèlement au plan de bobinage, et que les éléments de raccordement (51a, 51b) reposent avec leurs côtés larges (55) sur les côtés larges (53) des bandes de matériau (50a, 50b).

11. Dispositif selon la revendication 9 ou 10, **caractérisé en ce que** le conducteur primaire (44) présente deux parties de conducteur (44a, 44b), lesquelles servent à être parcourues par du courant en sens contraire et auxquelles on associe respectivement une partie des parties longitudinales (48a, 48b) de la bobine réceptrice (47) ou des moitiés (47a, 47b) de celle-ci, et que chacune de ces parties est disposée dans une zone du milieu de bandes de matériau (50a, 50b) associées.

12. Dispositif selon l'une des revendications 9 à 11, **caractérisé en ce que** les bandes de matériau (50a, 50b) et les éléments de raccordement (51a, 51b) se composent d'une ferrite.
